# EUROPÄISCHE PATENTSCHRIFT

(11) **EP 1 513 768 B1**
(45) Veröffentlichungstag und Bekanntmachung des Hinweises auf die Patenterteilung: **11.01.2006**
(21) Anmeldenummer: 03759920.6
(22) Anmeldetag: 07.06.2003
(51) Int. Cl.: C01B 33/193, C09C 1/30, C08K 3/36

(54) **ALUMINIUM-HALTIGE FÄLLUNGSKIESELSÄURE MIT EINSTELLBAREM BET/CTAB-VERHÄLTNIS**
ALUMINUM-CONTAINING PRECIPITATED SILICIC ACID HAVING AN ADJUSTABLE BET/CTAB RATIO
ACIDE SILICIQUE OBTENU PAR PRECIPITATION CONTENANT DE L'ALUMINIUM PRESENTANT UN RAPPORT BET/CTAB AJUSTABLE

(30) Priorität: 14.06.2002 DE 10226567; 16.05.2003 DE 10322214
(43) Veröffentlichungstag der Anmeldung: 16.03.2005
(73) Patentinhaber: Degussa AG, 40474 Düsseldorf (DE)
(72) Erfinder: UHRLANDT, Stefan, Belle Mead, NJ 08502 (US); THOMA, Herbert, 53913 Swisttal (DE); BLUME, Anke, 53919 Weilerswist (DE)
(74) Vertreter: Lang, Arne
(86) Internationale Anmeldenummer: PCT/EP2003/006001
(87) Internationale Veröffentlichungsnummer: WO 2003/106339

(56) Entgegenhaltungen:
- EP-A- 0 983 966
- WO-A-02/051749
- US-A- 5 800 608

## Beschreibung

Die vorliegende Erfindung betrifft eine Aluminium-haltige Fällungskieselsäure, die ein einstellbares BET/CTAB-Verhältnis aufweist, ein Verfahren zu deren Herstellung und deren Verwendung.

Der Einsatz von Fällungskieselsäuren in Elastomerenmischungen wie Reifen ist lange bekannt. An Kieselsäuren, die in Reifen eingesetzt werden, werden hohe Anforderungen gestellt. Sie sollen leicht und gut im Kautschuk dispergierbar sein, eine, ggf. in Gegenwart von Kopplungsreagenzien, gute Verbindung mit denen im Kautschuk enthaltenen Polymerketten bzw. den übrigen Füllstoffen eingehen. Neben der Dispergierbarkeit der Kieselsäure sind daher die spezifischen Oberflächen (BET oder CTAB) und die Ölaufnahmekapazität (DBP) wichtig. Die spezifischen Oberflächen sind ein Maß für die gesamte (BET) bzw. die äußere (CTAB) Oberfläche der Kieselsäure, da diese beiden Methoden unterschiedlich große Moleküle als Adsorbat einsetzen. Das Verhältnis dieser beiden Oberflächenkennzahlen (d. h. der Quotient BET/CTAB-Oberfläche) liefert einen Hinweis auf die Porengrößenverteilung der Kieselsäure und die Relation von "gesamter" zu "äusserer" Oberfläche der Kieselsäure. Die Oberflächeneigenschaften von Kieselsäuren bestimmen maßgeblich deren mögliche Anwendung, bzw. bestimmte Anwendungen einer Kieselsäure (z. B. Trägersysteme oder Füllstoffe für Elastomerenmischungen) verlangen bestimmte Oberflächeneigenschaften.

So offenbart US 6 013 234 die Herstellung von Fällungskieselsäure mit einer BET- und CTAB-Oberfläche jeweils von 100 bis 350 m²/g. Diese Kieselsäure ist besonders zur Einarbeitung in Elastomerenmischungen geeignet, wobei die BET/CTAB-Verhältnisse zwischen 1 und 1.5 liegen. In EP 0 937 755 werden verschiedene Fällungskieselsäuren offenbart, die eine BET-Oberfläche von ca. 180 bis ca. 430 m²/g und eine CTAB-Oberfläche von ca. 160 bis 340 m²/g besitzen. Diese Kieselsäuren sind besonders als Trägermaterial geeignet und weisen ein BETzum CTAB-Verhältnis von 1.1 bis 1.3 auf. EP 0 647 591 offenbart eine Fällungskieselsäure, die ein Verhältnis von BET- zu CTAB-Oberfläche von 0.8 bis 1.1 aufweist, wobei diese Oberflächenkennzeichen Absolutwerte von bis zu 350 m²/g annehmen können. In EP 0 643 015 wird eine Fällungskieselsäure, die als Abrasiv- und/oder Verdickungskomponente in Zahnpasten eingesetzt werden kann, vorgestellt, die eine BET-Oberfläche von 10 bis 130 m²/g und eine CTAB-Oberfläche von 10 bis 70 m²/g, d. h. ein BET- zu CTAB-Verhältnis von ca. 1 bis 5.21 aufweist.

Zur Herstellung von Reifen werden häufig Aluminium-haltige Fällungskieselsäuren als Füllstoff eingesetzt.

So offenbart EP 0 983 966 eine Aluminium-haltige Fällungskieselsäure mit den folgenden physikalisch-chemischen Eigenschaften:

| | |
|---|---|
| BET-Oberfläche | 80 - 180 m²/g |
| CTAB-Oberfläche | 80 - 139 m²/g |
| DBP-Zahl | 100 - 320 g/(100 g) |
| Al₂O₃-Gehalt | < 5 %. |

Fällungskieselsäuren dieser Art sind hinsichtlich ihrer Verwendung als Elastomerenfüllstoff verbesserungsfähig.

Es wurde gefunden, dass eine Aluminium-haltige Fällungskieselsäure mit einer hohen BET-Oberfläche besonders gut als Füllstoff (z. B. für Reifen) geeignet ist.

Gegenstand der vorliegenden Erfindung sind daher Fällungskieselsäuren, die

| | | |
|---|---|---|
| BET-Oberflächen | im Bereich | 150-400 m²/g, bevorzugt 190-300 m²/g |
| CTAB-Oberflächen | im Bereich | 140 - 350 m²/g, bevorzugt 145-250 m²/g; |
| | | 145 - 200 m²/g |
| Al₂O₃-Gehalte | im Bereich | 0.2 - 5 Gew.-%, bevorzugt 1-3 Gew.-% |

aufweisen.

Die Vorzugsbereiche sind jeweils unabhängig voneinander einstellbar.
Die erfindungsgemäßen Fällungskieselsäuren weisen bevorzugt ein bestimmtes Verhältnis der BET- zu CTAB-Oberfläche auf. Das BET/CTAB-Verhältnis kann in den folgenden Bereichen liegen: 1.0-1.6, bevorzugt 1.2-1.6.

Weiterhin können die Fällungskieselsäuren durch einen WK-Koeffizient (Verhältnis der Peakhöhe der Partikelgrößenverteilung der durch Ultraschall nicht abbaubaren Partikel im Größenbereich 1.0 - 100 µm zur Peakhöhe der abgebauten Partikel im Größenbereich < 1.0 µm) von ≤ 3.4, bevorzugt 0.1 bis 3.4, besonders bevorzugt 0.1 bis 3.0 und /oder durch eine DBP-Aufnahme von 180 - 320 g/(100 g) gekennzeichnet sein, wobei die Kieselsäuren in einer ersten Ausführungsform der vorliegenden Erfindung eine DBP in den Vorzugsbereichen 200 - 320 g/(100 g) 250 - 320 g/(100 g)und 250 - 300 g/(100 g) aufweisen und in einer weiteren Ausführungsform der vorliegenden Erfindung eine DBP mit dem Vorzugsbereich 180 - 300 g/(100 g) und 180 - 250 g/(100 g) aufweisen.

Bekannte Fellungskieselsäure weisen deutlich höhere WK-Koeffizienten und/oder zu anderen Werten verschobene Maxima in den Partikelgrößenverteilungen auf.

Es hat sich gezeigt, dass der WK-Koeffizient ein Maß für die Dispergierbarkeit einer Fällungskieselsäure ist, da er ein Maß für die "Abbaubarkeit" (=Dispergierbarkeit) der Fällungskieselsäure ist. Es gilt, eine Fällungskieselsäure ist umso leichter dispergierbar, je kleiner der WK-Koeffizient ist, d. h. je mehr Partikel bei der Einarbeitung in Kautschuk abgebaut werden.

Die BET- oder CTAB-Oberflächen bzw. deren Verhältnis der erfindungsgemäßen Fällungskieselsäure liegen bevorzugt in den folgenden Bereichen:

| BET [m²/g] | CTAB [m²/g] | Verhältnis BET/CTAB |
|---|---|---|
| 195 | 145 | 1.34 |
| 200 | 150 | 1.33 |
| 210 | 149 | 1.41 |
| 280 | 147 | 1.90 |
| 31.5 | 148 | 2.13 |
| 350 | 150 | 2.33 |
| 370 | 152 | 2.43 |

Die erfindungsgemäßen Fällungskieselsäuren weisen Oberflächeneigenschaften auf, die sie besonders gut als Füllstoff für Elastomere geeignet machen. Dies kann über die modifizierte Searszahl V₂, die hier bevorzugt zwischen 5 und 35 ml/(5 g), besonders bevorzugt zwischen 20 und 30 ml/(5 g) liegt, bestimmt werden.

Ein weiterer Gegenstand der vorliegenden Erfindung ist ein Verfahren zur Herstellung einer Fällungskieselsäure mit einer

| | | |
|---|---|---|
| BET-Oberfläche | im Bereich | 150 - 400 m²/g |
| CTAB-Oberfläche | im Bereich | 140 - 350 m²/g |
| Al₂O₃-Gehalt | im Berich | 0.2 - 5 Gew.-%, |

wobei
a) eine wässrige Wasserglaslösung vorgelegt wird
b) in diese Vorlage unter Rühren bei 55 - 95 °C für 30 - 100 Minuten gleichzeitig Wasserglas und Säuerungsmittel dosiert,
c) mit Säuerungsmittel auf einen pH-Wert von ca. 5 angesäuert und
d) filtriert und getrocknet wird,

mit der Maßgabe, dass in den Schritten b) und/oder c) Aluminiumverbindung zugegeben werden.

Die mit dem Verfahren gemäß der Erfindung hergestellten Kieselsäuren weisen die bereits genannten Vorzugsbereiche für die Parameter BET, CTAB, DBP, Al₂O₃-Gehalt und Sears-Zahl auf.

Die im Schritt a) vorgelegte Wasserglaslösung kann die gleiche Konzentration wie das in Schritt b) verwendete Wasserglas besitzen (z. B. Dichte 1.34 g/l, 27.4 %, SiO₂, 8.1 % Na₂O). Es können auch verdünnte Lösungen verwendet werden, z. B. 0.5 - 10 % SiO₂ und entsprechend 0.15 % - 3 % Na₂O.

Die in den Schritten b) und c) zugeführten Komponenten, d. h. Wasserglas und Säuerungsmittel können jeweils gleiche oder unterschiedliche Konzentrationen und/oder Zuflußgeschwindigkeiten aufweisen. In einer Verfahrensvariante ist die Konzentration der eingesetzten Komponenten in beiden Schritten gleich, jedoch beträgt die Zußußgeschwmdigkeit der Komponenten in Schritt c) 125 - 140 % der Zuflußgeschwindigkeit in Schritt b). In einer anderen Variante beträgt die Zutlussgeschwindigkeit in Schritt c) nur 30 - 100, bevorzugt 50 - 80 % der von Schritt b).

Neben Wasserglas (Natriumsilikat-Lösung) können auch andere Silikate wie Kaliumsilikat verwendet werden. Als Säuerungsmittel kann bevorzugt Schwefelsäure aber es können auch andere Säuerungsmittel wie HCl, HNO₃, H₃PO₄, CH₃COOH oder CO₂ eingesetzt werden.

Die Zugabe der Aluminiumverbindungen kann in beiden Schritten b) und c), aber auch nur in einem der Schritte b) oder c) jeweils gleich oder unterschiedlich als Feststoff, wässrige Lösung oder als Säuerungsmittel/ Alirniniumverbindung-Mischlösung erfolgen.

Die Aluminiumverbindungen können als wässrige Lösungen von bevorzugt Al₂(SO₄)₃, aber z. B. auch Al(NO₃)₃, AlCl₃ oder Al(OAc)₃ mit einer Konzentration von 50 - 130 g/l, bevorzugt 70 - 110 g/l in Wasser eingesetzt werden. Alternativ können Säuerungsmittel/Aluminiumverbindung-Mischlösungen eingesetzt werden.

Die Filtration und Trocknung der erfindungsgemäßen Kieselsäuren sind dem Fachmann geläufig und können z. B. in den bereits genannten Patentdokumenten nachgelesen werden. Bevorzugt wird erfindungsgemäße Kieselsäure durch eine Kurzzeittrocknung wie z. B. Sprühtrocknung (ggf. im Düsenturm), einem Flash- und/oder Spin-Flash-Trockner getrocknet. Die Sprühtrocknung kann z. B. gemäß US 4 097 771 durchgeführt werden. Hier wird im Düsenturm-Trockner eine Fällungskieselsäure erzeugt, die in Partikelform mit einem mittleren Durchmesser von über 80 µm, insbesondere über 96 µm, besonders bevorzugt über 200 µm erhalten wird.

Nach der Trocknung kann gegebenenfalls eine Vermahlung und/oder eine Granulation mit/ohne einem Walzenkompaktor durchgeführt werden. Hier liegt der mittlere Durchmesser des Endproduktes nach der Granulation bei ≥ 1 mm.

Die erfindungsgemäßen Kieselsäuren können daher z. B. als Füllstoffe in Elastomerenmischungen, vulkanisierbaren Kautschukmischungen, sonstigen Vulkanisaten insbesondere für Reifen, Batterieseparatoren, Anti-Blocking-Mittel, Mattierungsmittel in Lacken, Papierstrichen, Entschäumern, in Dichtungen, Tastaturpads, Förderbänder und/oder Fensterdichtungen verwendet werden.

Optional kann die erfindungsgemäße Kieselsäure mit Organosiliziumverbindungen (Silanen) der Formeln I bis III modifiziert werden

[R¹ₙ(RO)ᵣSi(Alk)ₘ(Ar)ₚ]_{q}[B] (I),

R¹ₙ(RO)₃₋ₙSi(Alkyl) (II),

oder

R¹ₙ(RO)₃₋ₙSi(Alkenyl) (III),

in denen bedeuten
- B:: -SCN, -SH, -SC(O)CH₃, -SC(O)(CH₂)₆CH₃, -Cl, NH₂, -OC(O)CHCH₂, -OC(O)C(CH₃)CH₂ (wenn q = 1), oder -Sₓ- (wenn q = 2),
- R und R¹:: aliphatischer, olefinischer, aromatischer oder arylaromatischer Rest mit 2 bis 30 C-Atomen, der optional mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Methacrylat-, Organosilanrest, wobei R und R¹ eine gleiche oder verschiedene Bedeutung oder Substituierung haben können,
- n:: 0; 1 oder 2,
- Alk:: einen zweiwertigen unverzweigten oder verzweigten Kohlenwasserstoffrest mit 1 bis 6 Kohlenstoffatomen,
- m:: 0 oder 1,
- Ar:: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Organosilanrest,
- p:: 0 oder 1 mit der Maßgabe, dass p und n nicht gleichzeitig 0 bedeuten,
- x:: eine Zahl von 2 bis 8,
- r:: 1, 2 oder 3, mit der Maßgabe, dass r + n + m + p = 4,
- Alkyl:: einen einwertigen unverzweigten oder verzweigten ungesättigten Kohlenwasserstoffrest mit 1 bis 20 Kohlenstoffatomen, bevorzugt 2 bis 8 Kohlenstoffatomen,
- Alkenyl:: einen einwertigen unverzweigten oder verzweigten ungesättigten Kohlenwasserstoffrest mit 2 bis 20 Kohlenstoffatomen, bevorzugt 2 bis 8 Kohlenstoffatomen.

Auch kann die erfindungsgemäße Kieselsäure mit siliziumorganischen Verbindungen der Zusammensetzung R²₄₋ₙSiXₙ (mit n = 1, 2, 3), [SiR²ₓX_{y}O]_{z} (mit 0 ≤ x ≤ 2; 0 ≤ y ≤ 2; 3 ≤ z ≤ 10, mit x + y = 2), [SiR²ₓX_{y}N]_{z} (mit 0 ≤ x ≤ 2; 0 ≤ y ≤ 2; 3 ≤ z ≤ 10, mit x + y = 2), SiR²ₙXₘOSiR²ₒXₚ (mit 0 ≤ n ≤ 3; 0 ≤ m ≤ 3; 0 ≤ o ≤ 3,0 ≤ p ≤ 3, mit n + m = 3, o + p = 3), SiR²ₙXₘNSiR²ₒXₚ (mit 0 ≤ n ≤ 3; 0 ≤ m ≤ 3; 0 ≤ o ≤ 3; 0 ≤ p ≤ 3, mit n + m = 3, o + p = 3), SiR²ₙXₘ[SiR²ₓX_{y}O]_{z}SiR²ₒXₚ (mit 0 ≤ n ≤ 3; 0 ≤ m ≤ 3; 0 ≤ x ≤ 2; 0 ≤ y ≤ 2; 0 ≤ o ≤ 3; 0 ≤ p ≤ 3; 1 ≤ z ≤ 10000, mit n + m = 3, x + y = 2, o + p = 3) modifiziert werden. Bei diesen Verbindungen kann es sich um lineare, cyclische und verzweigte Silan-, Silazan- und Siloxanverbindungen handeln. Bei R² kann es sich um Alkyl- und/oder Arylreste mit 1 bis 20 Kohlenstoffatomen handeln, welche mit funktionellen Gruppen wie der Hydroxygruppe, der Aminogruppe, Polyethern, wie Ethylenoxid und/oder Propylenoxid, und Halogenidgruppen, wie Fluorid, substituiert sein können. R² kann auch Gruppen wie Alkoxy-, Alkenyl-, Alkinyl- und Aryl-Gruppen und schwefelhaltige Gruppen enthalten. Bei X kann es sich um reaktive Gruppen wie Silanol-, Amino-, Thiol-, Halogenid-, Alkoxy-, Alkenyl- und Hydridgruppen handeln.

Bevorzugt werden lineare Polysiloxane der Zusammensetzung SiR²ₙXₘ[SiR²ₓX_{y}O]_{z}SiR²ₒXₚ (mit 0 ≤ n ≤ 3; 0 ≤ m ≤ 3; 0 ≤ x ≤ 2; 0 ≤ y ≤ 2; 0 ≤ 0 ≤ 3; 0 ≤ p ≤ 3; 1 ≤ z ≤ 10000, mit n + m = 3; x + y = 2; o + p = 3) verwendet, bei welchen R² bevorzugt durch eine Methylgruppe repräsentiert wird.
Besonders bevorzugt werden Polysiloxane der Zusammensetzung SiR²ₙXₘ[SiR²ₓX_{y}O]_{z}SiR²ₒXₚ (mit 0 ≤ n ≤ 3; 0 ≤ m ≤ 1; 0 ≤ x ≤ 2; 0 ≤ y ≤ 2; 0 ≤ o ≤ 3; 0 ≤ p ≤ 1; 1 ≤ z ≤ 1000, mit n + m = 3, x + y = 2, o + p = 3) verwendet, bei welchen R² bevorzugt durch Methyl repräsentiert wird.

Die Modifizierung der optional granulierten, ungranulierten, vermahlenen und/oder unvermahlenen Fällungskieselsäure mit einem oder mehreren der genannten Organosilanen kann in Mischungen von 0.5 bis 50 Teilen, bezogen auf 100 Teile Fällungskieselsäure, insbesondere 1 bis 15 Teile, bezogen auf 100 Teile Fällungskieselsäure erfolgen, wobei die Reaktion zwischen Fällungskieselsäure und Organosilan während der Mischungsherstellung (in situ) oder außerhalb durch Aufsprühen und anschließendes Tempern der Mischung, durch Mischen des Organosilans und der Kieselsäuresuspension mit anschließender Trocknung und Temperung (zum Beispiel gemäß DE 34 37 473 und DE 196 09 619) oder gemäß des Verfahrens beschrieben in DE 196 09 619 oder DE-PS 40 04 781 durchgeführt werden kann.

Als Organosiliziumverbindungen eignen sich grundsätzlich alle bifunktionellen Silane, die einerseits eine Kopplung zu dem silanolgruppenhaltigen Füllstoff und andererseits eine Kopplung zum Polymer bewerkstelligen können. Übliche verwendete Mengen der Organosiliziumverbindungen sind 1 bis 10 Gew.-%, bezogen auf die Gesamtmenge an Fällungskieselsäure.

Beispiele für diese Organosiliziumverbindungen sind:
Bis(3-triethoxysilylpropyl)tetrasulfid, Bis(3-triethoxysilylpropyl)disulfid, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen sind in WO 99/09036, DE 101 63 945, DE 102 23 658 beschrieben.

In einer bevorzugten Ausführungsform der Erfindung kann als Silan das Bis(3-triethoxysilylpropyl)tetrasulfid und Bis(3-triethoxysilyl-propyl)disulfid eingesetzt werden.

### Verwendung der erfindungsgemäßen Kieselsäure in Elastemerenmischungen

Die erfindungsgemaße Kieselsäure kann in Elastomerenmischungen, Reifen oder vulkanisierbaren Kautschukmischungen als Verstärkerfüllstoff in Mengen von 5 bis 200 Teilen, bezogen auf 100 Teile Kautschuk als Pulver, Mikroperlen oder Granulat sowohl mit Silanmodifizierung als auch ohne Silanmodifizierung eingemischt werden.

Die Zugabe eines oder mehrerer der oben genannten Silane kann zusammen mit den erfindungsgemißen Kieselsäuren zum Elastomeren erfolgen, wobei die Reaktion zwischen Füllstoff und Silan während des Mischprozesses bei erhöhten Temperaturen abläuft (in-situ-Modifizierung) oder in bereits vormodifizierter Form (zum Beispiel DE-PS 40 04 781), das heißt, beide Reaktionspartner werden außerhalb der eigentlichen Mischungsherstellung zur Reaktion gebracht.

Neben Mischungen, die ausschließlich die erfindungsgemäßen Kieselsäuren, mit und ohne Organosilanen gemäß Formeln I bis III als Füllstoffe enthalten, können die Elastomeren zusätzlich mit einem oder mehreren mehr oder weniger verstärkenden Füllstoffen gefüllt sein. In erster Linie gebräuchlich wäre hier ein Verschnitt zwischen Rußen (zum Beispiel Furnace-, Gas-, Flamm-, Acetylenruße) und den erfindungsgemäßen Kieselsäuren, mit und ohne Silan, aber auch zwischen Naturfüllstoffen, wie zum Beispiel Clays, Kieselkreide, weiteren kommerziellen Kieselsäuren und den erfindungsgemäßen Kieselsäuren.

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen ist denkbar und wird in diesem Rahmen auch realisiert.

Neben den erfindungsgemäßen Kieselsäuren, den Organosilanen und anderen Füllstoffen bilden die Elastomere einen weiteren wichtigen Bestandteil der Kautschukmischung. Die erfindungsgemäßen Kieselsäuren können in allen mit Beschleuniger/Schwefel, aber auch mit Peroxiden, vernetzbaren Elastomeren eingesetzt werden. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Ebenso bekannt sind die üblichen weiteren Bestandteile wie Weichmacher, Stabilisatoren, Aktivatoren, Pigmente, Alterungsschutzmittel und Verarbeitungshilfsmittel in den üblichen Dosierungen.

Die erfindungsgemäßen Kieselsäuren, mit und ohne Silan, finden Einsatz in allen Gummianwendungen, wie zum Beispiel Reifen, Fördergurte, Dichtungen, Keilriemen, Schläuche, Schuhsohlen etc.

Ein weiterer Gegenstand der Erfindung sind Elastomerenmischungen, insbesondere vulkanisierbare Kautschukmischungen, die die erfmdungsgemäßen Kieselsäuren in Mengen von 5 bis 200 Teilen, bezogen auch 100 Teile Elastomer bzw. Kautschuk enthalten. Die Einarbeitung dieser Kieselsäure und die Herstellung der dieses Kieselsäure enthaltenden Mischungen erfolgt in der in der Gummiindustrie üblichen Art und Weise auf einem Innenmischer oder Walzwerk. Die Darreichungs- bzw. Einsatzform kann sowohl als Pulver, Mikroperlen oder Granulat erfolgen. Auch hier unterscheiden sich die erfindungsgemäßen Kieselsäuren nicht von den bekannten hellen Füllstoffen.

Zur Erzielung eines guten Wertebildes in einer Polymermischung ist die Dispersion der Fällungskieselsäure in der Matrix, dem Polymer, von entscheidender Bedeutung.

### Verwendung der erfindungsgemäßen Fällungskieselsäuren in Papierstrichen

Heutige Tinten, welche vor allem bei allen Arten des sogenannten Inkjet Drucks und dessen verwandten Verfahren benutzt werden, sind meist von anionischer Natur. Daher ist es bzgl. der Farbmittelfixierung (von Farbstoffen und/oder Pigmenten), der Farbbrillanz, der Druckschärfe und -tiefe von großer Bedeutung, dass die zu bedruckenden Medien an ihrer Oberfläche, bzw. in ihren Oberflächenregionen, Teilchen mit einer zumindest teilweisen kationischen Oberfläche aufweisen.

Kieselsäuren und Silikate werden heute bereits vielfach für o.g. Formulierungen eines Striches (z.B. Papier-, Folienstrich) eingesetzt. Eine Modifikation dieser Kieselsäuren und Silikaten derart, dass an ihrer Oberfläche aktive, d.h. zugängliche, kationische Stellen (Sites) (EP 0 492 263) entstehen, kommt den heutigen Erfordernissen aufgrund der häufig verwendeten anionischen Farbmittel nach.

Aufgrund des Einflusses der eingebauten Metallionen auf den Brechungsindex können sich weitere Vorteile hinsichtlich der Verwendung in transparenten Medien ergeben, so z. B. bei der Verwendung von Kieselsäuren/Silikaten in Strichen für Folien.

Gegenstand der Erfindung ist daher auch die Verwendung der erfindungsgemäßen Fällungskieselsäure, bzw. der durch das erfindungsgemäße Verfahren hergestellten Fällungskieselsäure als Zusatz bei der Papierherstellung bzw. in Papierstrichen.

Insbesondere können erfindungsmäße Fällungskieselsäuren in Papierstrichen von z.B. Inkjet-Papieren und in Strichen für andere bedruckbare Medien, wie z. B. Overheadfolien oder bedruckbare Textilien verwendet werden.

Die erfindungsgemäßen Fällungskieselsäuren können nicht nur als getrocknete und gegebenenfalls vermahlene Produkte eingesetzt werden, sondern auch als Dispersionen. Vorteile in der Weiterverarbeitung bzw. Kostenvorteile können vor allem in der Verwendung von dispergierten Filterkuchen der erfindungsgemäßen Fällungskieselsäuren für die Anwendung in Papiermasse oder in Strichen von bedruckbaren Medien liegen.

Es ist für die Verwendung bei der Papierherstellung möglich, den Dispersionen der erfindungsgemäßen Fällungskieselsäuren Hilfsstoffe, die in der Papierindustrie üblich sind, wie z. B. Polyalkohole, Polyvinylalkohol, synthetische oder natürliche Polymere, Pigmente (TiO₂, Fe-Oxide, Al-Metallfilter), aber auch undotierte Kieselsäuren, d. h. ohne Aluminiumzusatz (Fällungskieselsäuren oder Aerosile) beizumischen.

Die physikalisch/chemischen Daten der erfindungsgemäßen Fällungskieselsäuren werden mit den folgenden Methoden bestimmt:
- BET-Oberfläche: Areameter, Fa. Ströhlein, gemäß ISO 5794/Annex D
- CTAB-Oberfläche: bei pH 9, gemäß Janzen und Kraus in Rubber Chemistry and Technology 44 (1971) 1287

### Bestimmung des Feststoffgehalts von Kieselsäuresuspensionen

Die Kieselsäuresuspension (z.B. Speise) wird im IR-Trockner bis zur Gewichtskonstanz getrocknet. Der Trocknungsverlust besteht im allgemeinen überwiegend aus Wasserfeuchtigkeit und nur aus Spuren anderer flüchtiger Bestandteile.

### Durchführung:

In eine vorher tarierte Aluminiumschale werden 2.0 g Kieselsäuresuspension eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit einen Wert von 2 mg/120 s unterschreitet. Der Trocknungsverlust in % wird vom Gerät bei Anwahl des 0-100%-Modus direkt angezeigt. Die Messung wird als Doppelbestimmung durchgeführt.

### Bestimmung der Feuchte von Kieselsäuren

Nach dieser Methode werden in Anlehnung an ISO 787-2 die flüchtigen Anteile (im folgenden der Einfachheit halber Feuchte genannt) von Kieselsäure nach 2 stündiger Trocknung bei 105 °C bestimmt. Dieser Trocknungsverlust besteht im allgemeinen überwiegend aus Wasserfeuchtigkeit.

### Durchführung

In ein trockenes Wägeglas mit Schliffdeckel (Durchmesser 8 cm, Höhe 3 cm) werden 10 g der pulverförmigen, kugelförmigen oder granulären Kieselsäure auf 0.1 mg genau eingewogen (Einwaage E). Die Probe wird bei geöffnetem Deckel 2 h bei 105 ± 2 °C in einem Trockenschrank getrocknet. Anschließend wird das Wägeglas verschlossen und in einem Exsikkatorschrank mit Kieselgel als Trocknungsmittel auf Raumtemperatur abgekühlt. Die Auswaage A wird gravimetrisch bestimmt.
Man bestimmt die Feuchte in % gemäß (E in g - A in g) * 100% / E in g.
Die Messung wird als Doppelbestimmung durchgeführt.

### Bestimmung der DBP-Aufnahme

Die DBP-Aufnahme (DBP-Zahl), die ein Mass für die Saugfähigkeit der Fällungskieselsäure ist, wird in Anlehnung an die Norm DIN 53601 wie folgt bestimmt:

### Durchführung

12.50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279 061) des Brabender-Absorptometer "E" gegeben. Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3.15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

### Auswertung

Die DBP-Aufnahme wird in g/(100 g) angegeben und anhand der folgenden Formel aus dem gemessenen DBP-Verbrauch berechnet. Die Dichte von DBP beträgt bei 20 °C typischer Weise 1.047 g/ml.
DBP-Aufnahme in g/(100 g)= Verbrauch an DBP in ml * Dichte des DBP in g/ml * 100 / 12.5 g.

Die DBP-Aufiiahme ist für die wasserfreie, getrocknete Kieselsäure definiert. Bei Verwendung von feuchten Fällungskieselsäuren ist der Wert mittels der folgenden Korrekturtabelle zu korrigieren.

Der Korrekturwert entsprechend dem Wassergehalt wird zu dem experimentell bestimmten DBP-Wert addiert; z. B. würde ein Wassergehalt von 5.8 % einen Zuschlag von 33 g/(100 g) für die DBP-Aufnahme bedeuten.

**Korrekturtabelle für Dibutylphthalataufnahme-wasserfrei-**

| | **.% Wasser** | | | | |
|---|---|---|---|---|---|
| **% Wasser** | .0 | .2 | .4 | .6 | .8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

### Bestimmung des WK-Koeffizienten: Aggregatgrößenverteilung mittels Laserbeugung

### Probenvorbereitung

Handelt es sich bei der zu bestimmenden Kieselsäure um ein Granulat, so werden 5 g der granulären Kieselsäure in ein Becherglas gegeben und die grobkörnigen Granulatstücke mit einem Pistill zerdrückt aber nicht gemörsert. 1.00 g der zerdrückten, pulverförmigen oder kugelförmigen Kieselsäure mit 5 ± 1 % Feuchtegehalt (gegegebenfalls wird der Feuchtegehalt durch Trocknen bei 105 °C im Trockenschrank oder gleichmäßiges Befeuchten eingestellt), deren Herstellung maximal 10 Tage zurueckliegt, wird in ein 30 ml Zentrifugenglas mit gewölbten Boden (Höhe 7 cm, Ø 3 cm, Tiefe der konvexen Wölbung 1 cm) eingewogen und mit 20.0 ml Dispersionslösung (Hydrophile Kieselsäuren: 20.0 g Natriumhexametaphosphat (Fa. Baker) auf 1000 ml mit entionisiertem Wasser aufgefüllt; Hydrophobe Kieselsäuren: 200.0 ml Ethanol p. A. mit 2.0 ml konzentrierter Ammoniaklösung und 0.50 g Triton X-100 (Fa. Merck) auf 1000 ml mit entionisiertem Wasser aufgefüllt) versetzt. Anschließend wird das Zentrifugenglas in ein doppelwandiges Glaskühlgefäß (80 ml Fassungsvermögen, Höhe 9 cm, 0 3.4 cm) mit Kühlwasseranschlüssen für Leitungswasser (20 °C) gestellt und die Probe 270 s mit einem Ultraschallfinger (Fa. Bandelin, Typ UW 2200 mit Horn DH 13 G und Diamantteller ⌀ 13 mm) behandelt. Dazu wird an dem Netzteil (Sonopuls, Fa. Bandelin, Typ HD 2200) des Ultraschallfingers 50 % Power und 80 % Pulse (entspricht 0.8 s Power und 0.2 s Pause) eingestellt. Durch die Wasserkühlung wird eine Erwärmung der Suspension maximal < 8 °C sicher gestellt. Bis die Probenzugabe in das Flüssigkeitsmodul des Laserbeugungsgeräts innerhalb von 15 min erfolgt, wird die Suspension mit einem Magnetrührer gerührt, um eventuelle Sedimentation zu verhindern.

### Durchführung

Vor Beginn der Messung lässt man das Laserbeugungsgerät LS 230 (Fa. Coulter) und das Flüssigkeitsmodul (LS Variable Speed Fluid Module Plus mit integriertem Ultraschallfinger CV 181, Fa. Coulter) 2 h warmlaufen und spült das Modul (Menüleiste "Steuerung/Spülen") 10 min lang.
In der Steuerleiste der Gerätesoftware wählt man über dem Menüpunkt "Messungen" das Dateifenster "Opt. Modell berechnen" aus und legt die Brechungsindizes in einer .rfd-Datei wie folgt fest: Flüssigkeitsbrechungsindex B. I. Real = 1.332; Material Brechungsindex Real = 1.46; Imaginär = 0.1.
In dem Dateifenster "Messzyklus" stellt man die Leistung der Pumpgeschwindigkeit auf 26 % und die Ultraschalleistung des intergrierten Ultraschallfingers CV 181 auf 3 ein. Die Punkte Ultraschall "während der Probenzugabe", "vor jeder Messung 10 Sekunden" und "während der Messung" sind zu aktivieren. Zusätzlich wählt man in diesem Dateifenster die folgenden Punkte aus:
Offsetmessung, Justieren, Hintergrundmessung, Messkonz. einstellen, Probeninfo eingeben, Messinfo eingeben, 2 Messungen starten, Autom. Spülen, Mit PIDS Daten.
Nach Abschluss der Kalibrierungsmessung mit einem LS Size Control G15 Standard (Fa. Coulter) und der Hintergrundmessung, erfolgt die Probenzugabe. Man fügt so lange suspendierte Kieselsäure zu, bis eine Lichtabsorption von 45 - 55 % erreicht ist und das Gerät "OK" meldet.
Die Messung erfolgt bei Raumtemperatur mit dem Auswertemodell der oben festgelegten .rfd-Datei. Von jeder Kieselsäureprobe werden drei Doppelbestimmungen von jeweils 60 Sekunden mit einer Wartezeit von 0 Sekunden durchgeführt.

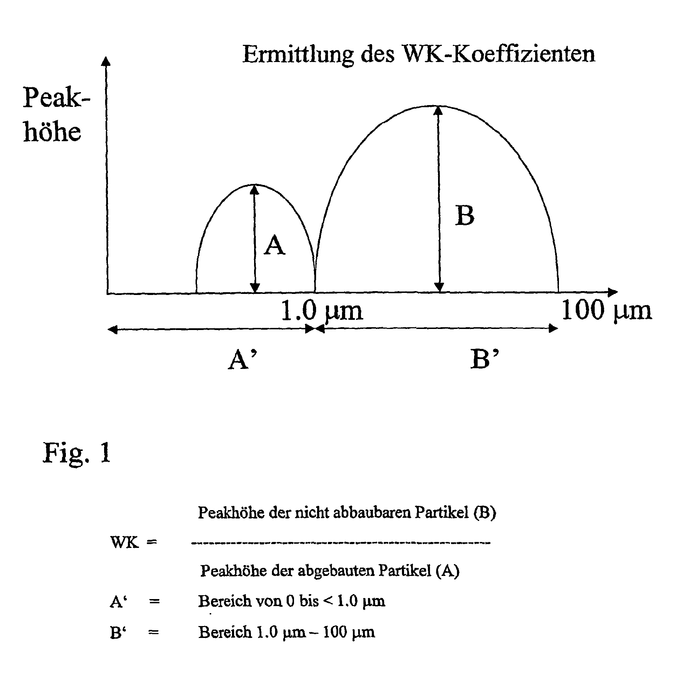

Aus der Rohdatenkurve berechnet die Software auf Basis der Volumenverteilung unter Berücksichtigung der Mie-Theorie und dem optischen Modell von Fraunhofer die Teilchengrößenverteilung. Typischer Weise findet man eine bimodale Verteilungskurve mit einem Modus A zwischen 0-1 µm (Maximum bei ca. 0.2 µm) und einem Modus B zwischen 1-100 µm (Maximum bei ca. 5 µm). Gemäß der Figur 1 läßt sich daraus der WK-Koeffizient bestimmen, welcher als Mittelwert aus sechs Einzelmessungen angegeben wird.

Ein wesentlicher Punkt hierbei ist, dass der Energieeintrag durch Ultraschall eine Simulation des Energieeintrags durch mechanische Kräfte in industriellen Mischaggregaten der Reifenindustrie darstellt.

Fig. 1 ist eine schematische Darstellung der für die Berechnung des WK-Koeffizienten nötigen Werte.

Die Kurven zeigen im Bereich um 1.0 - 100 µm ein erstes Maximum in der Partikelgrößenverteilung und im Bereich < 1.0 µm ein weiteres Maximum. Der Peak im Bereich 1.0 - 100 µm gibt den Anteil an unzerkleinerten Kieselsäurepartikeln nach der Ultraschallbehandlung an. Diese recht groben Partikel werden in den Kautschukmischungen schlecht dispergiert. Der zweite Peak mit deutlich kleineren Partikelgrößen (< 1,0 µm) gibt denjenigen Teil an Partikeln der Kieselsäure an, der während der Ultraschallbehandlung zerkleinert worden ist. Diese sehr kleinen Partikel werden in Kautschukmischungen ausgezeichnet dispergiert.

Der WK-Koeffizient ist nun das Verhältnis der Peakhöhe der nicht abbaubaren Partikel (B), deren Maximum im Bereich 1.0 - 100 µm (B') liegt, zur Peakhöhe der abgebauten Partikel (A), deren Maximum im Bereich < 1.0 µm (A') liegt.

### Bestimmung der modifizierten Searszahl von Kieselsäuren

Durch die Titration von Kieselsäure mit Kaliumhydroxid-Lösung im Bereich von pH 6 bis pH 9 läßt sich die modifizierte Searszahl (im folgenden Searszahl V₂ genannt) als Maß für die Zahl an freien Hydroxyl-Gruppen bestimmen.
Der Bestimmungsmethode liegen die folgenden chemischen Reaktionen zu Grunde, wobei
"Si"-OH eine Silanolgruppe symbolisieren soll:

"Si"-OH + NaCl ⇒ "Si"-ONa + HCl

HCl + KOH ⇒ KCl + H₂O.

### Durchführung

10.00 g einer pulverförmigen, kugelförmigen oder granulären Kieselsäure mit 5 ± 1 % Feuchte werden 60 Sekunden in der IKA-Universalmühle M 20 (550 W; 20 000 U/min) gemahlen. Gegebenenfalls muß der Feuchtegehalt durch Trocknen bei 105 °C im Trockenschrank oder gleichmäßiges Befeuchten eingestellt werden. 2.50 g der so behandelten Kieselsäure werden bei Raumtemperatur in ein 250 ml Titriergefäß eingewogen und mit 60.0 ml Methanol p. A. versetzt. Nach vollständiger Benetzung der Probe werden 40.0 ml entionisiertes Wasser zugegeben und man dispergiert mittels Ultra Turrax T 25 (Rührwelle KV-18G, 18 mm Durchmesser) 30 Sekunden lang bei einer Drehzahl von 18 000 U/min. Mit 100 ml entionisiertem Wasser werden die am Gefaßrand und Rührer anhaftenden Probepartikel in die Suspension gespült und in einem thermostatisiertem Wasserbad auf 25 °C temperiert.
Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7.00 und 9.00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0.1 mol/l) bzw. Salzsäurelösung (0.1 mol/l) der pH-Wert auf 6.00 eingestellt. Der Verbrauch an KOH- bzw. HCl-Lösung in ml bis pH 6.00 entspricht V₁'.
Danach werden 20.0 ml Natriumchlorid-Lösung (250.00 g NaCl p. A. mit entionisiertem Wasser auf 1 l aufgefüllt) zudosiert. Mit 0.1 mol/l KOH wird dann die Titration bis zum pH-Wert 9.00 fortgesetzt. Der Verbrauch an KOH-Lösung in ml bis pH 9.00 entspricht V₂'.
Anschließend werden die Volumen V₁', bzw. V₂' zunächst auf die theoretische Einwaage von 1 g normiert und mit fünf erweitert, woraus sich V₁ und die Searszahl V₂ in den Einheiten ml (5 g) ergeben. Die Messungen werden jeweils als Doppelbestimmungen durchgeführt.

### Beispiele

### Beispiel 1

In einem Reaktor aus rostfreiem Edelstahl mit Propellerrührsystem und Doppelmantelheizung werden 51.5 Wasser sowie 3.8 1 Wasserglas (Dichte 1.346 kg/l, 27.4 % SiO₂, 8.1 % Na₂O) vorgelegt.
Anschließend werden unter starken Rühren bei 87 °C für 80 Minuten 8.2 I/h Wasserglas, 0.345 l/h Aluminiumsulfatlösung (110 g/l Al₂O₃) sowie 0.6 l/h Schwefelsäure (96 %, Dichte 1.84 kg/l) zudosiert. Nach Ablauf der vorgegebenen Dosierzeit wird die Förderung von Wasserglas und Aluminiumsulfatlösung gestoppt und die Schwefelsäure weiter zugeführt, bis ein pH (gemessen an auf 20 °C temperierten Suspension) von 5.0 erreicht ist.
Die erhaltene Suspension wird wie üblich filtriert und mit Wasser gewaschen bis der Gehalt an Natriumsulfat <4 Gew.% beträgt. Der Filterkuchen wird mit wässriger Schwefelsäure und einem Scheraggregat verflüssigt. Die Kieselsäurespeise mit 16 % Feststoffgehalt wird anschließend sprühgetrocknet.
Das erhaltene pulverförmige Produkt weist eine BET-Oberfläche von 195 m²/g und eine CTAB-Oberfläche von 145 m²/g, eine DBP-Aufnahme von 306 g/(100 g) sowie einen WK-Koeffizienten von 1.46 auf. Der Aluminiumoxidgehalt des Endproduktes beträgt 1.0 % und die Searszahl V₂ beträgt 25.7 ml/(5 g).

### Beispiel 2

In einem Reaktor aus rostfreiem Edelstahl mit Propellerrührsystem und Doppelmantelheizung werden 51.5 lWasser sowie 3.8 lWasserglas (Dichte 1.346 kg/l, 27.4 % SiO₂ 8.1 % Na₂O) vorgelegt.
Anschließend werden unter starken Rühren bei 85 °C für 80 Minuten 8.2 l/h Wasserglas, 0.865 l/h Aluminiumsulfatlösung (110 g/l Al₂O₃) sowie 0.475 1/h Schwefelsäure (96 %, Dichte 1.84 kg/l) zudosiert. Nach Ablauf der vorgegebenen Dosierzeit wird die Förderung von Wasserglas und Aluminiumsulfatlösung gestoppt und die Schwefelsäure weiter zugeführt, bis ein pH (gemessen an auf 20°C temperierten Suspension) von 5.0 erreicht ist.

Die erhaltene Suspension wird wie üblich filtriert und mit Wasser gewaschen bis der Gehalt an Natriumsulfat <4 Gew.% beträgt. Der Filterkuchen wird mit wässriger Schwefelsäure und einem Scheraggregat verflüssigt. Die Kieselsäurespeise mit 16 % Feststoffgehalt wird anschließend sprühgetrocknet.

Das erhaltene pulverförmige Produkt weist eine BET-Oberfläche von 200 m²/g und eine CTAB-Oberfläche von 150 m²/g, eine DBP-Aufnahme von 285 g/(100 g) sowie einen WK-Koeffizienten von 2.78 auf. Der Aluminiumoxidgehalt des Endproduktes beträgt 2.0 % und die Searszahl V₂ beträgt 23.2 ml/(5 g).

### Beispiel 3

In einem Reaktor aus rostfreiem Edelstahl mit Propellerrührsystem und Doppelmantelheizung werden 51.5 l Wasser sowie 3.8 l Wasserglas (Dichte 1.346 kg/l, 27.4 % SiO₂, 8.1 % Na₂O) vorgelegt.
Anschließend werden unter starken Rühren bei 83 °C für 80 Minuten 8.2 l/h Wasserglas, 2.170 l/h Aluminiumsulfatlösung (110 g/l Al₂O₃) sowie 0.185 l/h Schwefelsäure (96 %, Dichte 1.84 kg/l) zudosiert. Nach Ablauf der vorgegebenen Dosierzeit wird die Förderung von Wasserglas und Aluminiumsulfatlösung gestoppt und die Schwefelsäure mit einer Flußrate von 0.475 l/h weiter zugeführt, bis ein pH (gemessen an der auf 20 °C temperierten Suspension) von 5.0 erreicht ist.
Die erhaltene Suspension wird wie üblich filtriert und mit Wasser gewaschen bis der Gehalt an Natriumsulfat <4 Gew.% beträgt. Der Filterkuchen wird mit wässriger Schwefelsäure und einem Scheraggregat verflüssigt. Die Kieselsäurespeise mit 18 % Feststoffgehalt wird anschließend sprühgetrocknet.
Das erhaltene pulverförmige Produkt weist eine BET-Oberfläche von 210 m²/g und eine CTAB-Oberfläche von 149 m²/g, eine DBP-Aufnahme von 247 g/(100 g) sowie einen WK-Koeffizienten von 3.11 auf. Der Aluminiumoxidgehalt des Endproduktes beträgt 4.5 % und die Searszahl V₂ beträgt 25.7 ml/(5 g).

### Beispiel 4

In dem nachfolgenden Beispiel werden folgende Stoffe eingesetzt:
- Krynol 1712: Styrol-Butadien-Kautschuk auf Basis Emulsionspolymerisation
- X 50 S: 50:50 Verschnitt aus Si 69 (Bis(3-triethoxysilylpropyl)tetrasulfan und N 330 (Carbon Black, Handelsprodukt Fa. Degussa AG)
- ZnO: Zinkoxid
- Stearinsäure:
- Naftolen: aromatisches Öl
- Lipoxol 4000: Polyethylenglykol
- Vulkanox 4020: N-(1,3-Dimethylbutyl)-N'-phenyl-p-phenylendiamin
- DPG: Diphenylguanidin
- CBS: N-Cyclohexyl-2-benzthiazylsulfenamid

### Schwefel

Die erfindungsgemäßen Fällungskieselsäuren werden als Pulver in Vergleich zu der StandardKieselsäure Ultrasil VN2 GR (Degussa AG) in einer reinen E-SBR-Mischung (Angaben in phr) eingemischt:

| | |
|---|---|
| | |
| Krynol 1712 | 137.5 |
| Kieselsäure | 50 |
| X 50 S | 3 |
| ZnO | 3 |
| Stearinsäure | 1 |
| Vulkanox 4020 | 2 |
| Lipoxol 4000 | 1.5 |
| DPG | 1.5 |
| CBS | 1.5 |
| Schwefel | 2.2 |

Als Mischaggregat wurde Werner & Pfleiderer 1.5 N-Typ verwendet, bei 45 min⁻¹, bei einer 1:1.11 Friktion, bei einem Stempeldruck von 5.5 bar, einem Leervolumen von 1.6 1, einem Füllgrad von 0.73 und einer Durchflusstemperatur von 90 °C. Als Mischvorgang wurde dreistufig gemischt: Stufe 1 0-1 min Polymere, 1-2 min weitere Bestandteile bis auf Beschleuniger und Schwefel, 2 min säubern, 2-5 min mischen und säubern (ab 3 min mischen bei 70 min⁻¹), ausfahren. Anschließend wird die Mischung 24 h bei Raumtemperatur gelagert. Stufe 2: 0-1 min Batch Stufe 1 plastizieren bei 70 min⁻¹ und 0.71 Füllgrad, 1-3 min Batchtemperatur von 150 °C halten durch Drehzahlvariation, 3 min ausfahren, 4 h bei Raumtemperatur lagern. Stufe 3: 0-2 min Batch Stufe 2, Beschleuniger und Schwefel bei 40 min⁻¹ mischen und 50°C Durchflusstemperatur und Füllgrad 0.69, nach 2 min ausfahren und auf Labormischwalzwerk Fell bilden (Durchmesser 20 mm, Länge 450 mm, Durchflusstemperatur 50°C), homogenisieren durch 3*rechts und 3* links einschneiden, 3* bei weitem (3,5 mm) und 3* bei engem (1 mm) Walzenspalt stürzen, Fell ausziehen.
Die Vulkameterprüfung bei 160 °C wurde gemäß der DIN 53529/2 bzw. ISO 6502 durchgeführt, Spannungswerte und die Bruchdehnung wurden gemäß DIN 53504 bestimmt, die Shore Härte gemäß DIN 53 505 bei 23 °C, der Ball Rebound gemäß ASTM D 5308, der heat build up gemäß ASTM D 623 A ('0.175 inch, Hub, 25 min), die MTS Daten gemäß ASTM D 2231-87 (10 Hz, 10% Vorverformung, Ampl. Sweep: 0.15-7 %), der Dispersionskoeffizient mittels einer Oberflächentopographie bestimmt [A. Wehmeier, "Filler Dispersion Analysis by Topography Measurements", Technical Report TR 820, Degussa AG, Applied Technology Advanced Fillers].

| | | **Ultrasil VN2 GR** | **erfindungsgemäße KS, Beispiel 1** | **erfindungsgemäße KS, Beispiel 2** |
|---|---|---|---|---|
| *ML(1+4) at 100°C; 2.Stu* | [ME] | 51 | 52 | 56 |
| *MDR: 160°C; 0.5°* | | | | |
| t 90% | [min] | 9.9 | 9.6 | 9.8 |
| t 80% - t 20% | [min] | 2.7 | 2.6 | 2.6 |
| **Vulkanisatdaten** | | | | |
| Modul 100% | [MPa] | 1.1 | 1.3 | 1.3 |
| Modul 300% | [MPa] | 4.6 | 5.3 | 5 |
| Bruchdehnung | [%] | 470 | 450 | 420 |
| *Shore-A-Härte* | [SH] | 52 | 52 | 52 |
| *Ball-Rebound, 0°C* | [%] | 19.3 | 19.5 | 20.5 |
| *Ball-Rebound, 60°C* | [%] | 65 | 65.4 | 67.8 |
| *Goodrich-Flexometer, 0.225inch, 25min, RT* | | | | |
| Heat Build Up | [°C] | 79 | 79 | 79 |
| Permanent Set | [%] | 1.8 | 1.7 | 1.7 |
| *MTS, 16Hz, 50N* +/- *25N* | | | | |
| E*, 0°C | [MPa] | 7.7 | 8.4 | 8.3 |
| E*, 60°C | [MPa] | 5.0 | 5.2 | 5.2 |
| tan d, 0°C | [-] | 0.282 | 0.277 | 0.263 |
| tan d, 60°C | [-] | 0.100 | 0.102 | 0.100 |
| *Dispersion, Topographie* | | | | |
| Peakfläche | [%] | 3.9 | 1.8 | 2.6 |

Die erfindungsgemäßen Kieselsäuren 1 und 2 führen gegenüber der Standardkieselsäure Ultrasil VN2 GR zu höheren Moduliwerten, höheren Bruchdehnungen, höheren E* Werten und einer deutlich verbesserten Dispersion (was einem besseren Abriebverhalten entspricht). Außerdem weisen beide erfindungsgemäße Kieselsäuren einen trotz der im Vergleich zu Ultrasil VN2 GR höheren Oberfläche gleich hohen heat build up auf. Dies entspricht einer gleich guten Erwärmung unter dynamischer Beanspruchung, woraus sich eine gleich hohe Lebensdauer der Elastomermischung unter Beanspruchung ableiten lässt.

## Patentansprüche

1. Fällungskieselsäure, **gekennzeichnet durch**
| | |
|---|---|
| BET-Oberflächen | 150 - 400 m²/g |
| CTAB-Oberflächen | 145 - 350 m²/g |
| Al₂O₃-Gehalt | 0.2 - 5 Gew.-% |
| modifizierte Searszahl V₂ | 5 - 35 ml/(5 g). |

2. Fällungskieselsäure nach Anspruch 1,
**dadurch gekennzeichnet,**
**dass** die Fällungskieselsäuren eine DBP-Aufnahme von 180 bis 320 g/(100 g) aufweisen.

3. Fällungskieselsäure nach Anspruch 1 oder 2,
**dadurch gekennzeichnet,**
**dass** die Fällungskieselsäuren ein Verhältnis von BET/CTAB-Oberflächen von 1.0 bis 1.6 aufweisen.

4. Fällungskieselsäure nach Anspruch 3,
**dadurch gekennzeichnet,**
**dass** sie ein Verhältnis BET/CTAB-Oberfläche von 1.2 bis 1.6 aufweist.

5. Fällungskieselsäure nach Anspruch 1 oder 2,
**dadurch gekennzeichnet,**
**dass** sie ein Verhältnis BET/CTAB-Oberfläche von 1.33 bis 2.43 aufweist.

6. Fällungskieselsäure nach einem der Ansprüche 1 bis 5,
**dadurch gekennzeichnet,**
**dass** sie einen wk-Koeffizienten ≤ 3.4 aufweist.

7. Fällungskieselsäure nach den Ansprüchen 1 bis 6,
**dadurch gekennzeichnet,**
**dass** ihre Oberfläche mit Organosilanen der Formeln
[R¹ₙ(RO)ᵣSi(Alk)ₘ(Ar)ₚ]_{q}[B] (I),
R¹ₙ(RO)₃₋ₙSi(Alkyl) (II),
oder
R¹ₙ(RO)₃₋ₙSi(Alkenyl) (III),
modifiziert sind, in denen bedeuten
B: -SCN, -SH, -SC(O)CH₃, -SC(O)(CH₂)₆CH₃, -Cl, -NH₂, -OC(O)CHCH₂, -OC(O)C(CH₃)CH₂ (wenn q =1), oder -Sₓ- (wenn q = 2),
Rund R¹: aliphatischer, olefinischer, aromatischer oder arylaromatischer Rest mit 2 bis 30 C-Atomen, der optional mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Methacrylat-, Organosilanrest, wobei R und R¹ eine gleiche oder verschiedene Bedeutung oder Substituierung haben können,
n: 0; 1 oder 2,
Alk: einen zweiwertigen unverzweigten oder verzweigten Kohlenwasserstoffrest mit 1 bis 6 Kohlenstoffatomen,
m: 0 oder 1,
Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Organosilanrest,
p: 0 oder 1 mit der Maßgabe, dass p und n nicht gleichzeitig 0 bedeuten,
x: eine Zahl von 2 bis 8,
r: 1, 2 oder 3, mit der Maßgabe, dass r + n + m + p = 4
Alkyl: einen einwertigen unverzweigten oder verzweigten gesättigten Kohlenwasserstoffrest mit 1 bis 20 Kohlenstoffatomen, bevorzugt 2 bis 8 Kohlenstoffatomen,
Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

8. Verfahren zur Herstellung einer Fällungskieselsäure mit
| | | |
|---|---|---|
| BET-Oberflächen | im Bereich | 150 - 400 m²/g |
| CTAB-Oberflächen | im Bereich | 145 - 350 m²/g |
| Al₂O₃-Gehalt | im Berich | 0.2 - 5 Gew.-%, |
wobei
a) eine wässrige Wasserglaslösung vorgelegt wird
b) in diese Vorlage unter Rühren bei 55 bis 95 °C für 30 bis 100 Minuten gleichzeitig Wasserglas und Schwefelsäure dosiert,
c) mit Schwefelsäure auf einen pH-Wert von ca. 5 angesäuert und
d) filtriert und getrocknet wird,
mit der Maßgabe, dass in den Schritten b) und/oder c) Aluminiumverbindungen zugegeben werden.

9. Verfahren nach Anspruch 8,
**dadurch gekennzeichnet,**
**dass** die in den Schritten b) und c) zugeführten Komponenten jeweils eine gleiche oder unterschiedliche Konzentration aufweisen.

10. Verfahren nach Anspruch 8 oder 9,
**dadurch gekennzeichnet,**
**dass** die in den Schritten b) und c) zuführten Komponenten jeweils eine gleiche Zulaufgeschwindigkeit aufweisen.

11. Verfahren nach Anspruch 8 oder 9,
**dadurch gekennzeichnet,**
**dass** die in den Schritten b) und c) zugeführten Komponenten jeweils unterschiedliche Zulaufgeschwindigkeit aufweisen.

12. Verfahren nach Anspruch 11,
**dadurch gekennzeichnet,**
**dass** bei gleicher Konzentration der Komponenten in den Schritten b) und c) die Zulaufgeschwindigkeit in Schritt c) 110 bis 200 % der Zulaufgeschwindigkeit in Schritt b) beträgt.

13. Verfahren nach Anspruch 11,
**dadurch gekennzeichnet,**
**dass** bei gleicher Konzentration der Komponenten in den Schritten b) und c) die Zulaufgeschwindigkeiten in Schritt c) 50 bis 100 % der Zulaufgeschwindigkeit in Schritt b) beträgt.

14. Verfahren nach Anspruch 8 bis 13,
**dadurch gekennzeichnet,**
**dass** die Trocknung durch Spin-flash, Düsenturm oder Sprühtrocknung und/oder Granulation mit/ohne Walzenkompaktor durchgeführt wird.

15. Verfahren nach einem der Ansprüche 8 bis 14,
**dadurch gekennzeichnet,**
**dass** man die Fällungskieselsäuren mit Organosilanen der Formeln I bis III in Mischungen von 0.5 bis 50 Teilen, bezogen auf 100 Teile Fällungskieselsäure, insbesondere 1 bis 15 Teile, bezogen auf 100 Teile Fällungskieselsäure modifiziert, wobei die Reaktion zwischen Fällungskieselsäure und Organosilan während der Mischungsherstellung (in situ) oder außerhalb durch Aufsprühen und anschließendes Tempern der Mischung oder durch Mischen des Silans und der Kieselsäuresuspension mit anschließender Trocknung und Temperung durchgeführt wird.

16. Vulkanisierbare Kautschukmischungen und Vulkanisate, die die Fällungskieselsäure gemäß einem der Ansprüche 1 bis 6 oder hergestellt nach einem der Ansprüche 8 bis 15 enthalten.

17. Reifen, enthaltend Fällungskieselsäure nach einem der Ansprüche 1 bis 6 bzw. hergestellt nach einem der Ansprüche 8 bis 15.

18. Verwendung der Kieselsäure gemäß einem der Ansprüche 1 bis 6 in Batterieseparatoren, Anti-Blocking-Mittel, Mattierungsmittel in Lacken, Papierstrichen oder Entschäumer, in Dichtungen, Tastaturpads, Förderbänder und Fensterdichtungen.

## Claims

1. A precipitated silica **characterized by** a
| | |
|---|---|
| BET surface area | 150-400 m²/g |
| CTAB surface area | 145-350 m²/g |
| Al₂O₃ content | 0.2-5% by weight |
| modified Sears number V₂ | 5-35 ml/(5 g) |

2. A precipitated silica according to claim 1, **characterized in that** it has a DBP absorption of from 180 to 320 g/(100 g).

3. A precipitated silica according to claim 1 or 2, **characterized in that** it has a BET/CTAB surface area ratio of from 1.0 to 1.6.

4. A precipitated silica according to claim 3, **characterized in that** it has a BET/CTAB surface area ratio of from 1.2 to 1.6.

5. A precipitated silica according to claim 1 or 2, **characterized in that** it has a BET/CTAB surface area ratio of from 1.33 to 2.43.

6. A precipitated silica according to any one of claims 1 to 5, **characterized in that** it has a wk coefficient ≤ 3.4.

7. A precipitated silica according to any one of claims 1 to 6, **characterized in that** its surface has been modified with an organosilane of the formula
[R¹ₙ(RO)ᵣSi(Alk)ₘ(Ar)ₚ]_{q}[B] (I),
R¹ₙ(RO)₃₋ₙSi(Alkyl) (II),
or
R¹ₙ(RO)₃₋ₙSi(Alkenyl) (III),
wherein
B is -SCN, -SH, -SC(O)CH₃, -SC(O)(CH₂)₆CH₃, -Cl, -NH₂, -OC(O)CHCH₂, -OC(O)C(CH₃)CH₂ (if q = 1) or -Sx- (if q = 2);
R and R¹ are each an aliphatic, olefinic, aromatic or arylaromatic radical having from 2 to 30 carbon atoms which may optionally be substituted by the following groups: hydroxyl, amino, alkoxide, cyanide, thiocyanide, halogen, suphonic acid, sulphonic ester, thiol, benzoic acid, benzoic ester, carboxylic acid, carboxylic ester, acrylate, methacrylate, organosilane radical, it being possible for R and R¹ to have an identical or different definition or substitution,
n is 0, 1 or 2;
Alk is a divalent unbranched or branched hydrocarbon radical having from 1 to 6 carbon atoms,
m is 0 or 1,
Ar is an aryl radical having from 6 to 12 carbon atoms, preferably 6 carbon atoms, which can be substituted by the following groups: hydroxyl, amino, alkoxide, cyanide, thiocyanide, halogen, sulphonic acid, sulphonic ester, thiol, benzoic acid, benzoic ester, carboxylic acid, carboxylic ester, organosilane radical,
p is 0 or 1 with the proviso that p and n are not both 0,
x is a number from 2 to 8,
r is 1, 2 or 3, with the proviso that r+n+m+p = 4,
Alkyl is a monovalent unbranched or branched saturated hydrocarbon radical having from 1 to 20 carbon atoms, preferably from 2 to 8 carbon atoms;
Alkenyl is a monovalent unbranched or branched unsaturated hydrocarbon radical having from 2 to 20 carbon atoms, preferably from 2 to 8 carbon atoms.

8. A process for preparing a precipitated silica having a
| | | |
|---|---|---|
| BET surface area | in the range | 150-400 m²/g |
| CTAB surface area | in the range | 145-350 m²/g |
| Al₂O₃ content | in the range | 0.2-5% by weight |
by
a) initially introducing an aqueous waterglass solution,
b) metering waterglass and sulphuric acid simultaneously into this initial charge at from 55 to 95°C for from 30 to 100 minutes with stirring,
c) acidifying to a pH of about 5 with sulphuric acid, and
d) filtering and drying the product
with the proviso that an aluminium compound is added in steps b) and/or c).

9. A process according to claim 8, **characterized in that** the components supplied in steps b) and c) each have an identical or a different concentration.

10. A process according to claim 8 or 9, **characterized in that** the components supplied in steps b) and c) each have an identical feed rate.

11. A process according to claim 8 or 9, **characterized in that** the components supplied in steps b) and c) each have a different feed rate.

12. A process according to claim 11, **characterized in that** with an equal concentration of the components in steps b) and c) the feed rate in step c) is from 110 to 200% of the feed rate in step b).

13. A process according to claim 11, **characterized in that** with an equal concentration of the components in steps b) and c) the feed rate in step c) is from 50 to 100% of the feed rate in step b).

14. A process according to any one of claims 8 to 13, **characterized in that** drying is carried out using a spin-flash, nozzle tower or spray drying and/or granulation with/without a roll compactor.

15. A process according to any one of claims 8 to 14, **characterized in that** the precipitated silica is modified with an organosilane of the formulae I to III in a mixture of from 0.5 to 50 parts, based on 100 parts of precipitated silica, in particular from 1 to 15 parts, based on 100 parts of precipitated silica, the reaction between precipitated silica and organosilane being carried out during the preparation of the mixture (in situ) or externally by spray application and subsequent thermal conditioning of the mixture or by mixing the silane and the silica suspension with subsequent drying and thermal conditioning.

16. A vulcanizable rubber mixture or vulcanizate comprising the precipitated silica according to any one of claims 1 to 6 or prepared according to any one of claims 8 to 15.

17. A tyre comprising a precipitated silica according to any one of claims 1 to 6 or prepared according to any one of claims 8 to 15.

18. The use of a precipitated silica according to any one of claims 1 to 6 in battery separators, antiblocking agents, flatting agents in paints, paper coatings or defoamers, in gaskets, keypads, conveyor belts or window seals.

## Revendications

1. Acide silicique de précipitation,
**caractérisé par**
| | |
|---|---|
| des surfaces BET de | 150 à 400 m²/g |
| des surfaces CTAB de | 145 à 350 m²/g |
| une teneur en Al₂-O₃ de | 0,2 à 5 % en poids |
| un indice Sears V₂ modifié de | 5 à 35 ml/(5 g). |

2. Acide silicique de précipitation selon la revendication 1,
**caractérisé en ce que**
les acides siliciques de précipitation présentent une absorption DBP de 180 à 320 g/(100 g).

3. Acide silicique de précipitation selon la revendication 1 ou 2,
**caractérisé en ce que**
les acides siliciques de précipitation présentent un rapport entre les surfaces BET et CTAB de 1,0 à 1,6.

4. Acide silicique de précipitation selon la revendication 3,
**caractérisé en ce qu'**
il présente un rapport entre les surfaces BET et CTAB de 1,2 à 1,6.

5. Acide silicique de précipitation selon la revendication 1 ou 2,
**caractérisé en ce qu'**
il présente un rapport entre les surfaces BET et CTAB de 1,33 à 2,43.

6. Acide silicique de précipitation selon les revendications 1 à 5,
**caractérisé en ce qu'**
il présente un coefficient wk ≤ 3,4.

7. Acide silicique de précipitation selon les revendications 1 à 6,
**caractérisé en ce que**
sa surface est modifiée avec des organosilanes de formules
[R¹ₙ(RO)ᵣSi(Alk)ₘ(Ar)ₚ]_{q}[B] (I),
R¹ₙ(RO)₃₋ₙSi(alkyle) (II),
ou
R¹ₙ(RO)₃₋ₙSi(alcényle) (III),
dans lesquelles
B : signifie -SCN, -SH, -SC(O)CH₃, -SC(O)(CH₂)₆CH₃, -Cl, -NH₂, -OC(O)CHCH₂, -OC(O)C(CH₃)CH₂ (si q = 1), ou -Sₓ- (si q = 2),
R et R¹: un radical aliphatique, oléfinique, aromatique ou arylaromatique portant 2 à 30 atomes de C qui peut être substitué, en option, par les groupes suivants : radical hydroxy, amino, alcoolate, cyanure, thiocyanure, halogène, acide sulfonique, ester de l'acide sulfonique, thiol, acide benzoïque, ester de l'acide benzoïque, acide carboxylique, ester de l'acide carboxylique, acrylate, méthacrylate, organosilane, R et R¹ ayant la même signification ou substitution ou une signification ou substitution différente,
n : 0 ; 1 ou 2,
Alk : un radical hydrocarbure bivalent non ramifié ou ramifié portant 1 à 6 atomes de carbone,
m : 0 ou 1,
Ar : un radical aryle portant 6 à 12 atomes de C, de préférence 6 atomes de C qui peut être substitué par les groupes suivants : radical hydroxy, amino, alcoolate, cyanure, thiocyanure, halogène, acide sulfonique, ester d'acide sulfonique, thiol, acide benzoïque, ester d'acide benzoïque, acide carboxylique, ester d'acide carboxylique, organosilane,
p : 0 ou 1 étant précisé que p et n ne signifient pas en même temps 0,
x : un nombre de 2 à 8,
r : 1, 2 ou 3, étant précisé que r + n + m + p = 4
Alkyle : un radical hydrocarbure saturé monovalent non ramifié ou ramifié portant 1 à 20 atomes de carbone, de préférence 2 à 8 atomes de carbone,
Alcényle : un radical hydrocarbure insaturé monovalent non ramifié ou ramifié portant 2 à 20 atomes de carbone, de préférence 2 à 8 atomes de carbone.

8. Procédé de préparation d'un acide silicique de précipitation avec
| | | |
|---|---|---|
| des surfaces BET | de l'ordre de | 150 à 400 m²/g |
| des surfaces CTAB | de l'ordre de | 145 à 350 m²/g |
| une teneur en Al₂-O₃ | de l'ordre de | 0,2 à 5 % en poids |
alors qu'
a) on prend une solution aqueuse de silicate,
b) on y ajoute en même temps du silicate et de l'acide sulfurique en agitant pendant 30 à 100 minutes à une température de 55 à 95°C,
c) on acidifie avec de l'acide sulfurique à un pH de 5 environ et
d) on filtre et on sèche,
étant précisé qu'on ajoute des composés d'aluminium aux coupes b) et/ ou c).

9. Procédé selon la revendication 8,
**caractérisé en ce que**
les composants introduits dans les coupes b) et c) présentent chacun une même concentration ou une concentration différente.

10. Procédé selon la revendication 8 ou 9,
**caractérisé en ce que**
les composants introduits dans les coupes b) et c) présentent chacun une même vitesse d'alimentation.

11. Procédé selon la revendication 8 ou 9,
**caractérisé en ce que**
les composants introduits dans les coupes b) et c) présentent chacun une vitesse d'alimentation différente.

12. Procédé selon la revendication 11,
**caractérisé en ce qu'**
avec une même concentration des composants dans les coupes b) et c), la vitesse d'alimentation dans la coupe c) est égale à 110 à 200 % de la vitesse d'alimentation dans la coupe b).

13. Procédé selon la revendication 11,
**caractérisé en ce qu'**
avec une même concentration des composants dans les coupes b) et c), la vitesse d'alimentation dans la coupe c) est égale à 50 à 100 % de la vitesse d'alimentation dans la coupe b).

14. Procédé selon la revendication 8 à 13,
**caractérisé en ce que**
le séchage est réalisé par spin-flash, dans une étuve verticale à tuyères ou par séchage par pulvérisation et/ou granulation avec/sans compacteur à rouleaux.

15. Procédé selon l'une quelconque des revendications 8 à 14,
**caractérisé en ce qu'**
on modifie les acides siliciques de précipitation avec des organosilanes des formules I à III dans des mélanges de 0,5 à 50 parties, par rapport à 100 parties d'acide silicique de précipitation, en particulier 1 à 15 parties, par rapport à 100 parties d'acide silicique de précipitation, la réaction entre l'acide silicique de précipitation et l'organosilane pendant la préparation du mélange (in situ) ou à l'extérieur étant réalisée par pulvérisation et tempérage subséquent du mélange ou par mélange du silane et de la suspension d'acide silicique avec séchage et tempérage subséquents.

16. Mélanges de caoutchouc vulcanisables et vulcanisats qui contiennent l'acide silicique de précipitation selon l'une quelconque des revendications 1 à 6, ou préparé selon l'une quelconque des revendications 8 à 15.

17. Pneus contenant de l'acide silicique de précipitation selon l'une quelconque des revendications 1 à 6, ou préparé selon l'une quelconque des revendications 8 à 15.

18. Utilisation de l'acide silicique selon l'une quelconque des revendications 1 à 6, dans des séparateurs de batterie, des agents anti-blocage, des agents matifiants dans les peintures, les couchages de papier ou les agents anti-mousse, dans les joints, les touches de claviers, les convoyeurs à bande et les joints de fenêtre.
